Europäisches Patentamt

European Patent Office

Office européen des brevets

(19)

(11) Numéro de publication : **0 013 522**
**B1**

(12) **FASCICULE DE BREVET EUROPÉEN**

(45) Date de publication du fascicule du brevet :
13.01.82

(51) Int. Cl.³ : **B 29 D 17/00, G 11 B 3/70**

(21) Numéro de dépôt : **79401034.8**

(22) Date de dépôt : **18.12.79**

(54) **Procédé de fabrication de disques souples et dispositif destiné à la mise en œuvre de ce procédé.**

(30) Priorité : **04.01.79 FR 7900199**

(43) Date de publication de la demande :
**23.07.80 (Bulletin 80/15)**

(45) Mention de la délivrance du brevet :
**13.01.82 Bulletin 82/02**

(84) Etats contractants désignés :
**DE GB NL SE**

(56) Documents cités :
**FR - A - 1 407 633**
**US - A - 3 221 367**
**US - A - 3 298 059**

(73) Titulaire : **"THOMSON-BRANDT"**
**173, bld Haussmann**
**F-75360 Paris Cedex 08 (FR)**

(72) Inventeur : **Llabres, Raymond**
**"THOMSON-CSF" - SCPI 173, bld Haussmann**
**F-75360 Paris Cedex 08 (FR)**
Inventeur : **Antoine, Robert**
**"THOMSON-CSF" - SCPI 173, bld Haussmann**
**F-75360 Paris Cedex 08 (FR)**
Inventeur : **Lacotte, Jean-Pierre**
**"THOMSON-CSF" - SCPI 173, bld Haussmann**
**F-75360 Paris Cedex 08 (FR)**
Inventeur : **Marchi, Charles**
**"THOMSON-CSF" - CSPI 173, bld Haussmann**
**F-75360 Paris Cedex 08 (FR)**

(74) Mandataire : **Lepercque, Jean et al**
**"THOMSON-CSF" - SCPI 173, Bld. Haussmann**
**F-75360 Paris Cedex 08 (FR)**

Imprimerie Jouve, 18, rue St-Denis, 75001 Paris, France

Procédé de fabrication de disques souples et dispositif destiné à la mise en œuvre
de ce procédé.

L'invention se rapporte à la fabrication de disques souples lisibles optiquement par un rayonnement concentré et a plus particulièrement pour objet un procédé de fabrication de tels disques et un dispositif destiné à la mise en œuvre de ce procédé.

Les disques lisibles optiquement sont généralement tels que l'information est enregistrée sur une piste sous forme de micro-cuvettes dont la largeur est de l'ordre du micromètre et dont la longueur est variable. Cette piste peut avoir la forme de cercles concentriques ou être une piste en spirale, le pas entre les sillons suivant la direction radiale étant compris entre 1,5 et 2 μm. De tels disques permettent d'enregistrer une grande quantité d'information lisible optiquement. La lecture est obtenue par diffraction d'un rayonnement concentré sur le plan contenant l'information lorsque le disque est en rotation, le dispositif de lecture comportant des dispositifs d'asservissement radial et vertical permettant de maintenir le point de focalisation du faisceau de lecture sur la piste. La lecture peut être effectuée par transmission ou par réflexion. Dans le cas d'une lecture par transmission, un disque enregistré sur ses deux faces peut être lu sans être retourné en déplaçant seulement le plan de focalisation du faisceau de lecture. Lorsque la piste est une piste en spirale et si les spirales sont de sens inversés sur les deux faces, la lecture du disque peut être effectuée d'une façon continue, sans interruption pour le passage d'une face à l'autre ; en effet la lecture de la première face est effectuée en suivant un sens de progression radiale donné, puis en fin de piste, le plan de focalisation du faisceau est amené sur la seconde face, sans déplacement radial de la tête de lecture, et la seconde face est alors lue en suivant le sens de progression radiale inverse du premier.

Un tel dispositif de lecture par transmission peut donc permettre une lecture continue d'un programme qui peut atteindre une heure, et un accès aléatoire à l'une des faces en modifiant seulement le plan de focalisation du faisceau de lecture.

Mais pour qu'un dispositif de ce type fonctionne de manière satisfaisante, il est absolument nécessaire, compte tenu de la dynamique de l'asservissement radial et de la densité d'information enregistrée, que les défauts de centrage du disque par rapport au dispositif de lecture, et donc l'excentrement du trou central du disque par rapport à la piste, ne dépasse pas une vingtaine de microns. Le procédé de fabrication par pressage de tels disques doit donc être tel que les défauts d'excentricité restent dans cette gamme.

Dans les procédés de fabrication utilisés pour les disques audio souples, l'opération de perçage du trou central peut être effectuée par poinçonnement du disque, encore placé sur le poste de pressage, à l'issue du cycle pression-température. Pour les disques audio-rigides obtenus par injection ou thermo compression, le matériau peut être injecté ou thermocomprimé autour d'un centreur, le trou central est obtenu par moulage pendant le pressage. Le centrage des matrices gravées par rapport au disque percé est alors obtenu au moyen d'un axe ayant une portée conique qui sert également à la fixation des matrices aux plateaux chauffants. L'alignement est assuré lors de la fermeture des plateaux par des colonnes de guidage. Le centrage de la spirale par rapport au trou central est obtenu à 150 ou 200 μm près, ce qui est tout à fait convenable pour la lecture, par contact, des disques audio. Mais une telle excentricité est excessive pour la lecture optique de disques portant l'information enregistrée sur une piste de 1 μm de large avec un pas de 1,6 μm.

Pour de tels disques, des moyens assurant un centrage plus précis doivent être mis en œuvre. Un autre procédé consiste à effectuer le perçage du trou central sur une presse à compression à colonnes latérales, mais, compte tenu de la précision requise, il n'est pas possible de centrer les deux plateaux portant les matrices gravées à partir de pieds de centrage latéraux qui seraient fixés sur la périphérie des plateaux car les phénomènes de dilatation présentent un caractère dissymétrique lorsqu'un seul plateau est chauffé et le problème du centrage des matrices gravées n'est pas résolu.

Le procédé suivant l'invention permet d'éviter les inconvénients des procédés sus mentionnés et est particulièrement applicable aux disques double-face pour lesquels le pressage est effectué simultanément pour les deux faces, les deux matrices étant préalablement centrées l'une par rapport à l'autre ; le perçage du trou central est effectué pendant le pressage, le positionnement du trou étant obtenu à partir du positionnement des matrices.

L'invention a plus particulièrement pour objet un procédé de fabrication de disques souples gravés sur au moins une face au moyen d'une presse à compression comportant un plateau fixe et un plateau mobile, une première matrice gravée étant portée par l'un des plateaux et une seconde matrice, contre-matrice ou matrice gravée, étant portée par le second plateau, principalement caractérisé en ce qu'il consiste à amener la bande de matériau entre les plateaux ouverts de la presse à compression, à effectuer un avant trou dans la bande au moyen d'un premier poinçon porté par le plateau mobile lors de la fermeture des plateaux, ce poinçon étant ajusté à un second poinçon creux et porté par l'autre plateau, ces deux poinçons servant de centreurs pour les matrices portées par les plateaux et l'un de ces poinçons étant flottant latéralement dans le plateau correspondant de façon que les matrices soient centrées l'une par rapport à l'autre à la fin de la phase de fermeture du fait de l'engagement du premier poinçon dans le second, puis à découper le trou central dans la bande au moyen du second poinçon, ce poinçon étant maintenu en position de fin de course pendant toute la fin du cycle de pressage.

L'invention a également pour objet un dispositif destiné à la mise en œuvre du procédé, comportant une presse à compression dont la colonne centrale comporte les éléments nécessaires à la mise en œuvre du procédé et plus particulièrement un premier poinçon de diamètre $d_1$ muni d'un centreur de diamètre $d_2$ coulissant dans un fourreau flottant par rapport au plateau correspondant, pour effectuer la première perforation, un second poinçon de diamètre $d_2$ comportant un trou en forme d'entonnoir ajusté au premier poinçon, et des moyens pour appliquer au second poinçon une force suffisante pour découper un trou de diamètre $d_2$ dans la bande.

L'invention sera mieux comprise et d'autres caractéristiques et avantages apparaîtront à l'aide de la description qui suit en référence aux figures annexées.

La figure 1 représente une coupe d'un mode de réalisation du dispositif destiné à la mise en œuvre du procédé de fabrication de disques souples suivant l'invention.

Les figures 2, 3, 4 et 5 représentent la zone centrale du même dispositif pendant certaines phases du procédé de fabrication.

La figure 6 représente schématiquement, un second mode de réalisation du dispositif destiné à la mise en œuvre du procédé de fabrication suivant l'invention.

La figure 7 représente en détails la partie centrale du plateau portant le poinçon susceptible d'être centré.

Le dispositif destiné à la mise en œuvre du procédé suivant l'invention, adaptable sur n'importe quelle presse à compression est tel que le centrage d'une matrice gravée par rapport à l'autre matrice est obtenu en alignant leurs axes respectifs, avant la fermeture des plateaux chauffants de telle manière qu'aucun glissement ne soit nécessaire lors de la fermeture pour obtenir ce centrage, un tel glissement pouvant conduire à une dégradation de la surface gravée sur l'une ou l'autre matrice portant l'information.

Les matrices utilisées sont percées en leur centre, le poinçon utilisé pour le perçage du trou central du disque agissant par cisaillement du matériau par rapport au bord du trou central de la matrice ; le diamètre du trou découpé dans les matrices a la valeur requise pour le trou sur le disque lorsque le perçage est effectué à froid ou une valeur supérieure tenant compte du retrait après démoulage fonction du matériau, lorsque le perçage du trou sur le disque est effectué à chaud. Dans les deux cas, le jeu prévu entre le poinçon et la matrice ne dépasse pas 5 μm, de façon que le positionnement du trou par rapport à la gravure des matrices soit obtenu avec une bonne précision.

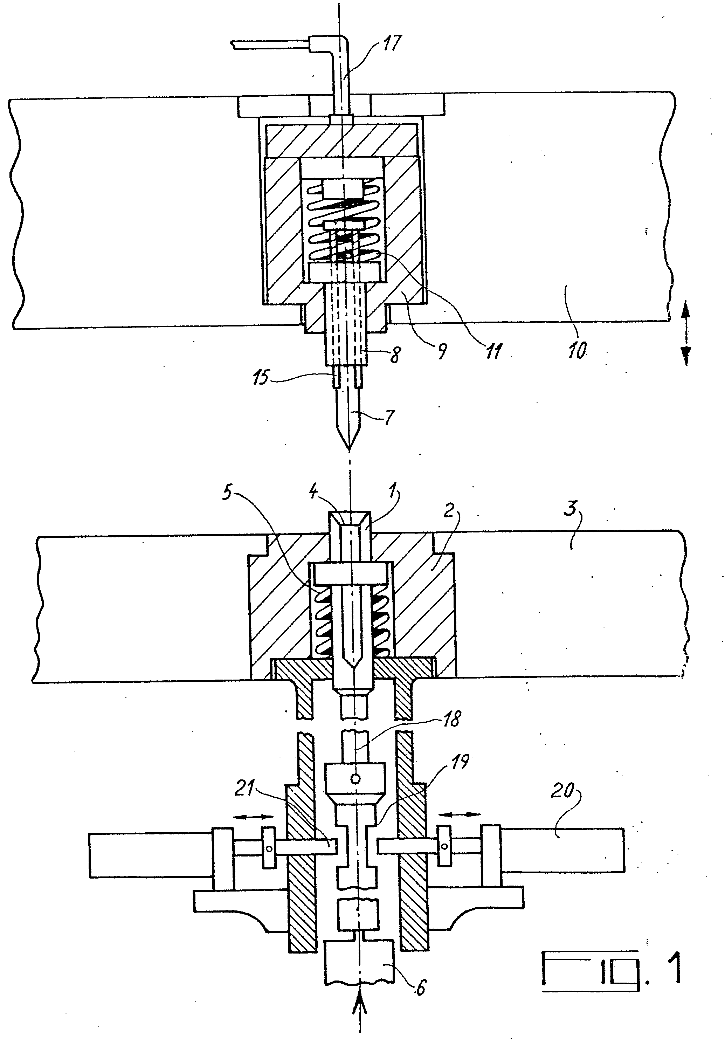

Le dispositif au repos est représenté en détails sur la figure 1 et comporte principalement un premier poinçon escamotable de diamètre $d_2$ égal au diamètre du trou central du disque à percer, 1, soit 15 mm par exemple, ce poinçon coulissant dans un fourreau 2. Ce poinçon est utilisé comme centreur pour la première matrice sur le plateau inférieur fixe 3, le fourreau 2 étant solidaire du plateau inférieur. Ce poinçon est percé d'un trou calibré 4, en forme d'entonnoir dont le fond a un diamètre $d_1$ égal à celui de l'avant trou à effectuer sur le disque, soit 7 mm par exemple. Le mouvement de montée et de descente de ce poinçon 1, peut être commandé soit par pression sur un ressort 5, soit par un vérin pneumatique 6, fournissant une force supérieure à la force nécessaire à la découpe. Le dispositif comporte de plus un second poinçon escamotable 7, de même diamètre que le trou calibré 4 muni d'un centreur 8, de même diamètre que le poinçon 1, coulissant dans un fourreau flottant 9, une cavité étant prévue dans le plateau supérieur mobile 10, pour loger le fourreau flottant. Le poinçon 1 et le poinçon 7 sont usinés emmanchés l'un de l'autre de façon à être parfaitement ajustés. Le mouvement de montée et de descente de ce poinçon 7 et du centreur associé 8 est commandé par pression sur un ressort 11. La première matrice étant mise en position sur le plateau inférieur au moyen du poinçon 1, la seconde matrice est mise en position sur le plateau supérieur 10 et du fait du flottement possible de son axe et de l'ajustement des deux poinçons, cette seconde matrice est exactement centrée par rapport à la première lorsque le second poinçon est engagé dans le premier.

Au repos le fourreau flottant 9 apparaît en surépaisseur par rapport au plat du plateau 10 de façon que lorsqu'une matrice est placée sur le plateau 10 autour du centreur 8, le fourreau remonte légèrement dans son enceinte et ne soit plus en butée sur le plateau. En effet si une telle disposition n'était pas prévue le frottement du fourreau sur le plateau entraverait le centrage de la matrice portée par le plateau supérieur par rapport à la matrice portée par le plateau inférieur. Le poinçon 1 peut être bloqué en position au moyen d'un vérin 20 agissant sur une butée 21 bloquant l'axe 18 du poinçon, une encoche 19 étant prévue à cet effet.

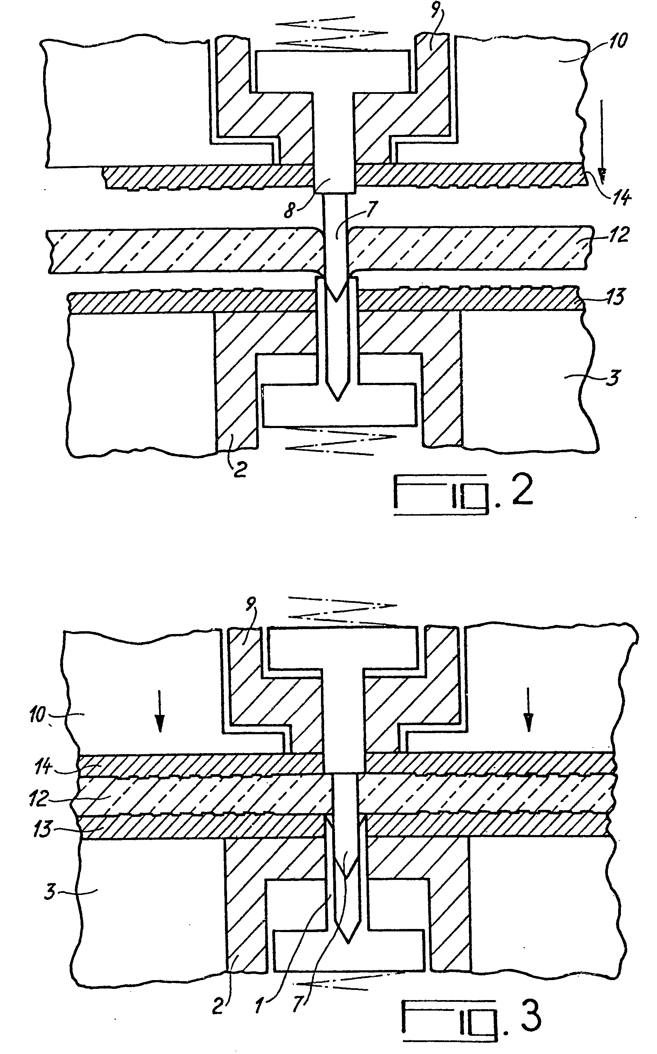

Le procédé de pressage mis en œuvre dans une presse à compression à chaud comportant un tel dispositif de centrage des matrices et de perçage du trou central du disque comporte les phases suivantes décrites en référence aux figures 2 à 5.

Dans une première phase le matériau plastique à presser est amené sous forme de bande 12 entre les deux plateaux 3 et 10, alors éloignés l'un de l'autre portant les deux matrices 13 et 14, et ce matériau plastique est alors perforé par le poinçon 7 lors de la descente du plateau supérieur. Le dispositif à la fin de cette première étape est représenté sur la figure 2. Les deux ressorts 5 et 11 sont tarés de telle manière que la perforation du matériau plastique 12, par le centreur 8, soit obtenue sans que les deux poinçons ne s'escamotent.

Dans une seconde phase, les matrices gravées 13 et 14, sont centrées l'une par rapport à l'autre au moyen des poinçons 1 et 7. Pour cela le plateau supérieur est approché du plateau inférieur, le poinçon 7 étant engagé dans le poinçon 1. Les plateaux ne sont pas encore fermés. Les poinçons s'escamotent ensuite d'une quantité égale à leur hauteur de dépassement par rapport au plan des matrices gravées. Les ressorts assurent alors le pincement de la feuille de plastique entre les poinçons sans autoriser la découpe. La figure 3 représente le dispositif à la fin de cette seconde phase. Le pressage du disque est effectué lorsque le film plastique est ainsi pincé entre les deux poinçons 1 et 7. Les plateaux chauffants 3 et 10 soumettant le film au cycle pression-température nécessaire au pressage.

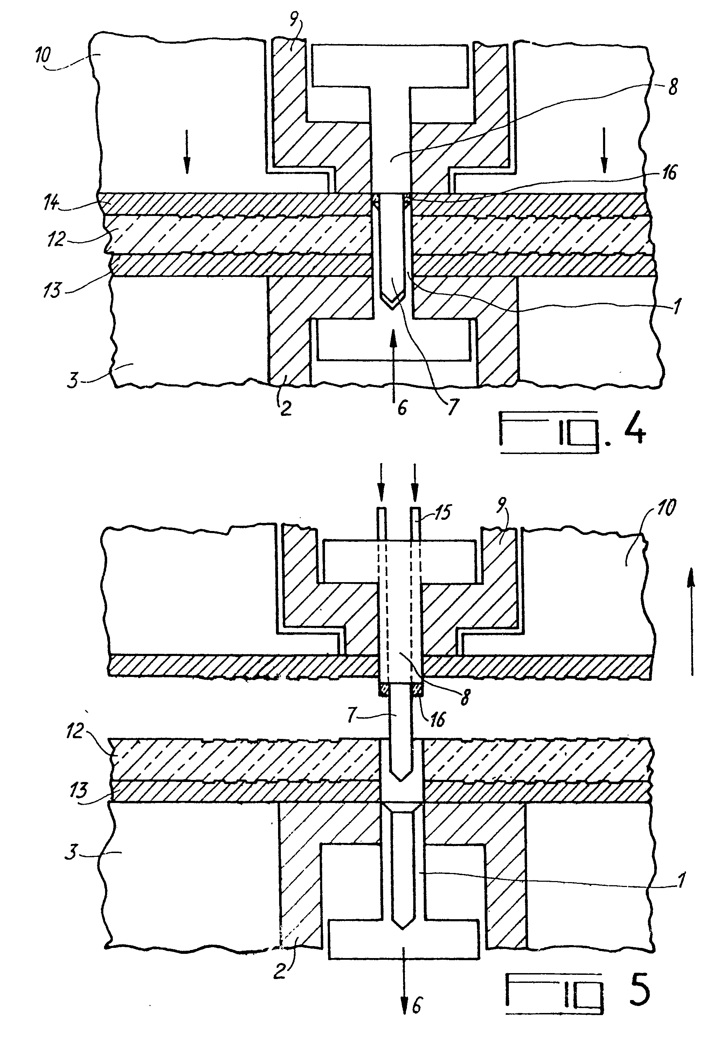

C'est également pendant cette phase de pressage que le trou central est découpé. Pour cela, le poinçon 1, poussé par le vérin pneumatique 6, pousse le matériau plastique et donc le poinçon 7, et le matériau plastique est ainsi cisaillé par rapport à la matrice supérieure. Cette opération est effectuée à une température où la contrainte de cisaillement est la plus faible, c'est-à-dire à la température la plus haute. Cette position est maintenue pendant le refroidissement de telle sorte que le matériau plastique se moule autour du poinçon 1. Le diamètre du trou central est alors calibré par le diamètre du poinçon 1. Le dispositif de pressage à la fin de cette phase est représenté sur la figure 4.

Dans la quatrième phase, le plateau supérieur est remonté, le vérin 6 étant encore dans la position correspondant à la position haute du poinçon 1. Puis lorsque le plateau supérieur est dans la position de repos haute, le poinçon 1 est ramené au niveau de la matrice inférieure 13 par commande du vérin pneumatique 6, c'est-à-dire dans une position inférieure par rapport à la position de repos dans laquelle le poinçon 1 dépasse de la matrice. Le disque n'est plus alors maintenu en son centre. Cette position du dispositif est représentée sur la figure 5.

La dernière phase consiste alors à démouler le disque ainsi moulé en le séparant de la matrice inférieure par un dispositif de démoulage piloté par la remontée du plateau mobile et la bande peut être alors avancée pour procéder à un nouveau pressage. Le copeau 16 résultant du perçage par le poinçon 1 reste fixé entre le centreur 8 et le poinçon 7. Ce copeau est éjecté au moyen d'éjecteurs tels que 15 commandés par de l'air comprimé arrivant à l'intérieur du fourreau 9 par la canalisation 17 (figure 1), ces éjecteurs coulissant entre le poinçon et le centreur qui lui est lié. Ce copeau est évacué ensuite par une injection directionnelle d'air comprimé de façon à le diriger hors de la zone de pressage.

Dans le cadre d'un procédé de pressage à froid, le dispositif fonctionne de la même manière si ce n'est que la température à laquelle le perçage est effectué pendant le cycle de formage ne peut plus être liée aux contraintes de cisaillement.

Les matrices utilisées, portant l'information, peuvent être des matrices en nickel obtenues par un procédé galvanique ; leur dureté est alors inférieure à celle des poinçons et ces matrices peuvent être endommagées du fait du perçage par cisaillement entre le poinçon 1 et la matrice supérieure (lorsque le perçage est effectué de bas en haut).

Pour éviter cet inconvénient, il est possible de traiter au préalable les matrices dans leurs zones centrales en y effectuant un traitement de surface du type chromage sur une épaisseur de 4 à 5 $\mu$m. Il est également possible d'adjoindre à la matrice, une pastille rapportée, en acier traité présentant la même dureté que les poinçons et de même diamètre que le poinçon 1.

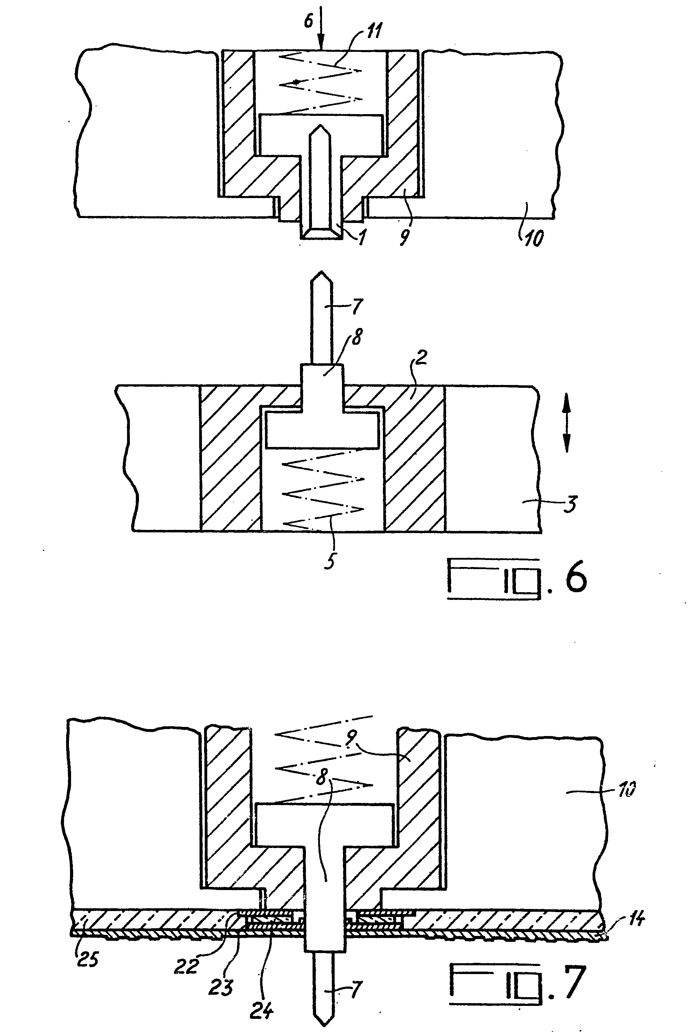

L'invention n'est pas limité au dispositif destiné à la mise en œuvre du procédé de fabrication précisément décrit. En particulier, dans ce dispositif, le poinçon 1 a été supposé glissant dans un guide fixe par rapport au plateau correspondant, le poinçon 7 et le centreur associé 8 étant supposés glissant dans un guide mobile, le guide étant réalisé dans un fourreau flottant dans une cavité prévue à cet effet dans l'autre plateau. Cette disposition n'est absolument pas limitative et le poinçon 7 destiné à effectuer la première perforation du disque peut coulisser dans un guide fixe par rapport au plateau, le poinçon 1 destiné à effectuer la découpe définitive coulissant dans un guide mobile par rapport au plateau correspondant. Cette disposition peut être intéressante lorsque le plateau supérieur est fixe et que le pressage est effectué en déplaçant le plateau inférieur vers le haut, le perçage du trou central pouvant alors être effectué par un poinçon agissant de haut en bas, et la première perforation par un poinçon porté par le plateau inférieur mobile agissant de bas en haut. Une telle structure est représentée schématiquement sur la figure 6. Sur cette figure le plateau inférieur 3 est le plateau mobile, le plateau supérieur 10 étant fixe. Le poinçon, 7, qui doit être porté par le plateau mobile pour effectuer la première perforation au diamètre $d_1$, inférieur au diamètre $d_2$ du trou central définitif, est donc placé dans le fourreau 2, fixe par rapport au plateau 3. Le poinçon 1 qui est utilisé pour la découpe définitive et qui est porté par le plateau fixe est placé dans le fourreau 9 flottant par rapport au plateau 10. Le vérin pneumatique 6 associé à ce poinçon est placé du côté du plateau fixe.

Dans la description ci-dessus, les matrices ont été décrites comme placées directement contre les plateaux de la presse à compression. En pratique, des coussins élastiques sont prévus entre les matrices et les plateaux de façon à compenser pneumatiquement les défauts qui pourraient affecter les faces arrière des matrices, la pression étant ainsi uniformisée sur toute la surface du matériau pressé.

Le coussin élastique peut être une plaque de mousse percée en son centre au même diamètre que la matrice gravée ; mais du fait même de l'élasticité de ce coussin, lorsque la course du poinçon est telle qu'il est ramené en retrait du coussin élastique, ce dernier se déforme et s'engage sur le trajet du poinçon. Lors du perçage, du fait de ce fluage, une rondelle du coussin élastique est prise entre les deux poinçons et découpée en même temps que le disque. Après plusieurs perçages, le coussin élastique ayant perdu au centre sa forme initiale, la matrice gravée risque de se déformer. Pour éviter cet inconvénient un dispositif supplémentaire, représenté sur la figure 7 est prévu sur le plateau portant le fourreau flottant 9, entre la matrice gravée 14 et le fourreau 9, dans la zone centrale du coussin élastique. Ce dispositif a la forme d'un amortisseur, « silent-bloc », formé de deux rondelles métalliques 22 et 23 entre lesquelles est collée une rondelle de caoutchouc 24. Le coussin élastique 25 est percé au diamètre extérieur de la rondelle métallique 23 sur laquelle s'appuie la partie centrale de la matrice gravée 14. Le coussin élastique peut fluer sans rentrer dans la zone de glissement prévue entre le plateau 10 et le fourreau 9 pour le centrage de la matrice, cette zone étant protégée par la rondelle 22 de diamètre extérieur supérieur au diamètre du trou prévu dans le plateau pour le glissement du fourreau. De plus, la rondelle de caoutchouc 24 prévue entre les deux rondelles métalliques permet de conserver une certaine souplesse dans la zone centrale.

Un tel dispositif peut être adapté sur n'importe quelle presse à compression et plus particulièrement sur une presse à guidage par colonne centrale. Pour une presse à compression fonctionnant à chaud, les moyens de chauffage et de refroidissement peuvent être quelconques. Le chauffage peut, par exemple, être obtenu par des résistances électriques, de la vapeur circulant dans les plateaux ou d'autres fluides susceptibles d'être chauffés. Le refroidissement peut, par exemple, être obtenu par circulation d'eau, d'eau glycolée ou d'air.

Le matériau pressé peut être un film de PVC ou de polyester enduit de PVC. Dans ce dernier cas, le matériau étant mécaniquement plus stable le trou central obtenu dans le matériau à partir d'un dispositif donné aura des dimensions plus stables, mais la contrainte de cisaillement est plus élevée, ce qui entraîne une usure plus rapide de la matrice ; l'utilisation de matrices renforcées en leurs centres peut alors être nécessaire. D'une manière générale, les jeux entre le trou central des matrices et le centreur 8 ou le poinçon 1, et les jeux nécessaires au glissement des poinçons dans leurs fourreaux sont de l'ordre de 4 à 5 $\mu$m, le jeu entre le fourreau flottant et le plateau correspondant peut être de l'ordre de 1 à 2 mm.

## Revendications

1. Procédé de fabrication de disques souples gravés sur au moins une face au moyen d'une presse à compression comportant un plateau fixe (3) et un plateau mobile (10), une première matrice gravée (13) étant portée par l'un des plateaux et une seconde matrice (14), contre-matrice ou matrice gravée, étant portée par le second plateau, caractérisé en ce qu'il consiste à amener la bande de matériau (12) entre les plateaux ouverts de la presse à compression, à effectuer un avant trou dans la bande au moyen d'un premier poinçon (7) porté par le plateau mobile (10) lors de la fermeture des plateaux, ce poinçon étant ajusté à un second poinçon creux (1) et porté par l'autre plateau, ces deux poinçons servant de centreurs pour les matrices (13, 14) portées par les plateaux et l'un (7) de ces poinçons étant flottant latéralement dans le plateau correspondant de façon que les matrices soient centrées l'une par rapport à l'autre à la fin de la phase de fermeture du fait de l'engagement du premier poinçon dans le second, puis à découper le trou central dans la bande (12) au moyen du second poinçon (1), ce poinçon étant maintenu en position de fin de course pendant toute la fin du cycle de pressage.

2. Procédé selon la revendication 1, caractérisé en ce que la bande de matériau (12) à presser étant avancée pas à pas, il consiste à perforer cette bande pendant la phase de rapprochement des deux plateaux (3, 10) au moyen du premier poinçon (7), ce poinçon ayant un diamètre $d_1$ et étant muni d'une base (8) de diamètre $d_2 > d_1$ formant centreur pour la matrice correspondante et coulissant dans un fourreau (9) prévu à cet effet dans le plateau mobile, $d_1$ étant le diamètre de l'avant trou et $d_2$ étant le diamètre du trou central à découper dans la bande, puis à centrer les deux matrices (13, 14) pendant la fin de la phase de fermeture, le poinçon de diamètre $d_1$ étant guidé dans le second poinçon (1), ce poinçon ayant un diamètre $d_2$ et coulissant dans un fourreau (2) prévu à cet effet dans le plateau fixe et utilisé comme centreur pour la matrice correspondante, ce second poinçon étant percé d'un trou (4) en forme d'entonnoir dont le fond, de diamètre $d_1$, est ajusté au premier poinçon, le fourreau (9) logé dans le plateau supérieur étant mobile latéralement dans ce plateau pour permettre le centrage, le centreur et le second poinçon pinçant la bande de matériau lorsque les plateaux sont fermés, puis à effectuer le pressage et à percer le trou central au moyen du second poinçon auquel est appliqué une force suffisante pour cisailler le matériau par rapport à la matrice portée par le plateau mobile.

3. Procédé selon les revendications 1 ou 2, caractérisé en ce que, le pressage étant effectué à chaud, le perçage du trou central est effectué à une température choisie pour que la contrainte de cisaillement soit la plus faible.

4. Procédé selon l'une quelconque des revendications 1 à 3, caractérisé en ce que, à la fin du cycle de pressage, le plateau mobile (10) est ouvert, puis le second poinçon (1) est ramené au niveau de la matrice porté par le plateau correspondant, de façon à faciliter le démoulage.

5. Procédé selon la revendication 4, caractérisé en ce que le copeau (16) résultant du perçage du trou central par le second poinçon est éjecté par des éjecteurs (15) coulissant entre le premier poinçon (7) et le centreur (8) qui lui est lié.

6. Procédé selon les revendications 1 ou 2, caractérisé en ce que les deux poinçons (7, 1) sont, au repos, maintenus en position au moyen de ressorts (11, 5) tarés à des valeurs sensiblement égales et de telle manière que le centreur (8) lié au premier poinçon et le second poinçon (1) dépassent des matrices correspondantes (14, 13) avant la fermeture des plateaux (10, 3) et s'escamotent pour être au même niveau que les matrices lorsque les plateaux sont fermés.

7. Dispositif destiné à la mise en œuvre du procédé de fabrication de disques souples selon l'une quelconque des revendications précédentes, caractérisé en ce qu'il comporte une presse à compression comportant un plateau fixe (3) et un plateau mobile (10), un poinçon (7) de diamètre $d_1$ muni d'une base (8) de diamètre $d_2 > d_1$ formant centreur, $d_1$ étant le diamètre de l'avant trou et $d_2$ étant le diamètre du trou central à découper dans les disques, ce poinçon étant susceptible de coulisser dans un fourreau (9) prévu à cet effet dans l'un (10) des plateaux, un second poinçon (1) de diamètre $d_2$ percé d'un trou (4) en forme d'entonnoir dont le fond de diamètre $d_1$ est exactement ajusté au premier poinçon, ce second poinçon étant susceptible de coulisser dans un fourreau (2) prévu à cet effet dans l'autre plateau (3), le fourreau (9) logé dans le plateau supérieur étant mobile latéralement dans ce plateau pour permettre le guidage du premier poinçon (7) dans le second (1), le dispositif comportant en outre des moyens destinés à appliquer une force au moins égale à la force nécessaire au perçage de l'avant trou au premier poinçon et une force au moins égale à celle nécessaire au perçage du trou central au second poinçon.

8. Dispositif selon la revendication 7, caractérisé en ce que les moyens destinés à appliquer les forces aux premier (7) et second (1) poinçons comprennent deux ressorts tarés (11, 5).

9. Dispositif selon la revendication 7, caractérisé en ce qu'un amortisseur formé de deux rondelles métalliques (22, 23) collées sur une rondelle de caoutchouc (24) entoure le poinçon (7) porté par le plateau supérieur pour isoler le coussin élastique servant de support à la matrice gravée, de ce poinçon.

## Claims

1. Method of making flexible disks engraved on at least one surface by means of a press comprising a stationary plate (3) and a movable plate (10), a first engraved die (13) carried by one of the plates and a second die (14), a counter die or engraved die, carried by the second plate, characterized in that the material strip (12) is brought between the open plates of the press, that in the strip on closure of the plates by means of a first punch (7) carried by the movable plate (10) a core hole is formed, the punch being aligned with a hollow punch (1) carried by the other plate and both punches serving as centering means for the dies (13, 14) carried by the plates, one (7) of the two punches being floatingly mounted in the lateral direction in the corresponding plate so that the dies at the end of the closure phase due to the engagement of the first punch in the second punch are centered relatively to each other, and that then out of the strip (12) the center hole is punched by means of the second punch (1) which during the entire end of the pressing cycle is held in the end position.

2. Method according to claim 1, characterized in that with stepwise advancing of the material strip (12) to be pressed said strip is perforated during the approach phase of the plates (3, 10) by means of the first punch (7), said punch having a diameter $d_1$ and being provided with a base (8) having the diameter $d_2 > d_1$ which forms the centering means for the corresponding die and slides for this purpose in a sleeve (9) provided for this purpose in the movable plate, $d_1$ being the diameter of the core hole and $d_2$ the diameter of the center hole to be stamped out of the strip, that then the two dies (13, 14) are centered at the end of the closure phase, the punch with the diameter $d_1$ being guided in the second punch which has the diameter $d_2$ and slides in a sleeve (2) provided for this purpose in the stationary plate and is used as centering means for the corresponding die, a hole (4) in the form of a funnel leading through the second punch, the bottom of said funnel with the diameter $d_1$ being aligned with the first punch, and the sleeve (9) disposed in the upper plate being laterally movable to permit centering, the centering means and the second punch clamping the material strip when the plates are closed, and that then the pressing takes place and the punching out of the center hole is carried out by means of the second punch on which a force is exerted which is adequate to shear the material with respect to the die carried by the movable plate.

3. Method according to claim 1 or 2, characterized in that the pressing operation is carried out with heat and that the punching out of the center hole is carried out at a temperature which is selected so that the shearing stress is minimized.

4. Method according to any one of claims 1 to 3, characterized in that at the end of the pressing cycle the movable plate (10) is opened and then the second punch (1) is brought to the height of the die carried by the corresponding plate so that removal from the die is facilitated.

5. Method according to claim 4, characterized in that the punch core (16) resulting from the punching out of the center hole by the second punch is ejected with the aid of ejection means (15) which slide between the first punch (7) and the centering means (8) connected thereto.

6. Method according to claims 1 or 2, characterized in that the two punches (7, 1) are held in the rest condition in their position with the aid of springs (11, 5) which are rated to substantially equal values and in such a manner that the centering means (8) connected to the first punch and the second punch (1) prior to the closure of the plates (10, 3) project at the corresponding dies and are withdrawn so that they lie at the same level as the dies when the plates are closed.

7. Apparatus for carrying out the method of making flexible disks according to any one of the preceding claims, characterized by a press comprising a stationary plate (3) and a movable plate (10), a punch (7) with the diameter $d_1$ which is provided with a base (8) forming a centering means and having the diameter $d_2 > d_1$, $d_1$ being the diameter of the core hole and $d_2$ the diameter of the center hole to be stamped out of the disks, said punch being adapted to slide in a sleeve provided for this purpose in one (10) of the plates, a second punch (1) having the diameter $d_2$ which is traversed by a hole (4) in the form of a funnel whose bottom with the diameter $d_1$ is aligned exactly with the first punch, the second punch being adapted to slide in a sleeve (2) provided for this purpose in the other plate (3) and the sleeve (9) disposed in the upper plate being laterally movable in said upper plate to permit centering of the first punch (7) in the second punch (1), and means for exerting a force on the first punch which is at least equal to the force necessary for punching out the core hole, and for exerting a force on the second punch which is at least equal to the force necessary for punching out the center hole.

8. Apparatus according to claim 7, characterized in that the means for exerting the forces on the first punch (7) and the second punch (1) are two rated springs (11, 5).

9. Apparatus according to claim 7, characterized in that the punch (7) carried by the upper disk is surrounded by a damping member comprising two metal shims (22, 23) adhered to a rubber washer (24) so that the resilient cushion serving as carrier for the engraved die is isolated from the punch.

## Ansprüche

1. Verfahren zum Herstellen von biegsamen, wenigstens auf einer Fläche gravierten Platten mittels einer Druckpresse mit einer stationären Scheibe (3) und einer beweglichen Scheibe (10), einer ersten gravierten, von einer der Scheiben getragenen Preßform (13) und einer von der zweiten Scheibe getragenen zweiten Preßform (14), einer Gegenpreßform oder gravierten Preßform, dadurch gekennzeichnet, daß der Materialstreifen (12) zwischen die offenen Scheiben der Druckpresse gebracht wird, daß in den Streifen beim Schleißen der Scheiben mittels eines von der beweglichen Scheibe (10) getragenen ersten Stanzstempels (7) ein Kernloch gebildet wird, wobei der Stanzstempel auf einen von der anderen Scheibe getragenen zweiten, hohlen Stanzstempel (1) ausgerichtet ist und beide Stanzstempel als Zentrierorgane für die von den Scheiben getragenen Preßformen (13, 14) dienen, und wobei einer (7) der beiden Stanzstempel in seitlicher Richtung in der entsprechenden Scheibe schwimmend gelagert ist, so daß die Preßformen am Ende der Schließphase aufgrund des Eingriffs des ersten Stanzstempels in den zweiten Stanzstempel relativ zueinander zentriert werden, und daß dann aus dem Streifen (12) das Mittelloch mittels des zweiten Stanzstempels (1) ausgestanzt wird, der während des gesamten Endes des Preßzyklus in der Endposition gehalten wird.

2. Verfahren nach Anspruch 1, dadurch gekennzeichnet, daß bei schrittweise vorwärts bewegtem zu pressendem Materialstreifen (12) dieser Materialstreifen während der Annäherungsphase der Scheiben (3, 10) mittels des ersten Stanzstempels (7) durchlocht wird, wobei dieser Stanzstempel einen Durchmesser $d_1$ hat und mit einem den Durchmesser $d_2 > d_1$ aufweisenden Sockel (8) versehen ist, der das Zentrierorgan für die entsprechende Preßform bildet und in einer zu diesem Zweck in der beweglichen Scheibe vorgesehenen Büchse (9) gleitet, und wobei $d_1$ der Durchmesser des Kernlochs und $d_2$ der Durchmesser des aus dem Streifen auszustanzenden Mittellochs ist, daß dann die zwei Preßformen (13, 14) am Ende der Schließphase zentriert werden, wobei der Stanzstempel mit dem Durchmesser $d_1$ in dem zweiten Stanzstempel geführt wird, der den Durchmesser $d_2$ hat und in einer zu diesem Zweck in der stationären Scheibe vorgesehenen Büchse (2) gleitet und als Zentrierorgan für die entsprechende Preßform benutzt wird, und wobei durch den zweiten Stanzstempel ein Loch (4) in Form eines Trichters führt, dessen Boden mit dem Durchmesser $d_1$ auf den ersten Stanzstempel ausgerichtet ist, und wobei die in der oberen Scheibe angebrachte Büchse (9) zur Ermöglichung der Zentrierung seitlich beweglich ist, und wobei das Zentrierorgan und der zweite Stanzstempel den Materialstreifen festklemmen, wenn die Scheiben geschlossen werden, und daß dann das Pressen erfolgt und das Ausstanzen des Mittellochs mittels des zweiten Stanzstempels durchgeführt wird, auf den eine Kraft ausgeübt wird, die ausreicht, das Material bezüglich der von der beweglichen Scheibe getragenen Preßform abzuscheren.

3. Verfahren nach Anspruch 1 oder 2, dadurch gekennzeichnet, daß der Preßvorgang mit Wärme durchgeführt wird und daß das Ausstanzen des Mittellochs bei einer Temperatur durchgeführt wird, die so ausgewählt ist, daß die Scherungsbeanspruchung am geringsten ist.

4. Verfahren nach einem der Ansprüche 1 bis 3, dadurch gekennzeichnet, daß am Ende des Preßzyklus die bewegliche Scheibe (10) geöffnet wird und dann der zweite Stanzstempel (1) auf die Höhe der von der entsprechenden Scheibe getragenen Preßform gebracht wird, damit die Entnahme aus der Form erleichtert wird.

5. Verfahren nach Anspruch 4, dadurch gekennzeichnet, daß der aus dem Ausstanzen des Mittellochs durch den zweiten Stanzstempel resultierende Stanzkern (16) mit Hilfe von Ausstoßorganen (15) ausgestoßen wird, die zwischen dem ersten Stanzstempel (7) und dem mit ihm verbundenen zentrierorgan (8) gleiten.

6. Verfahren nach Anspruch 1 oder 2, dadurch gekennzeichnet, daß die zwei Stanzstempel (7, 1) im Ruhezustand mit Hilfe von Federn (11, 5) in ihrer Lage gehalten werden, die auf im wesentlichen gleiche Werte und auf solche Weise bemessen sind, daß das mit dem ersten Stanzstempel verbundene Zentrierorgan (8) un der zweite Stanzstempel (1) vor dem Schließen der Scheiben (10, 3) an den entsprechenden Preßformen vorstehen und sich zurückziehen, damit sie auf der gleichen Höhe wie die Preßformen liegen, wenn die Scheiben geschlossen sind.

7. Vorrichtung zur Durchführung des Verfahrens zum Herstellen biegsamer Scheiben nach einem der vorhergehenden Ansprüche, gekennzeichnet durch eine Druckpresse mit einer stationären Scheibe (3) und einer beweglichen Scheibe (10), einen Stanzstempel (7) mit dem Durchmesser $d_1$, der mit einem ein Zentrierorgan bildenden Sockel (8) mit dem Durchmesser $d_2 > d_1$ versehen ist, wobei $d_1$ der Durchmesser des Kernlochs und $d_2$ der Durchmesser des aus den Scheiben auszustanzenden Mittellochs ist und wobei dieser Stanzstempel in einer zu diesem Zweck in einer (10) der Scheiben vorgesehenen Büchse (9) gleiten kann, einen zweiten Stanzstempel (1) mit dem Durchmesser $d_2$, durch den ein Loch (4) in Form eines Trichters führt, dessen Boden mit dem Durchmesser $d_1$ exakt auf den ersten Stanzstempel ausgerichtet ist, wobei der zweite Stanzstempel in einer zu diesem Zweck in der anderen Scheibe (3) vorgesehenen Büchse (2) gleiten kann und die in der oberen Scheibe angebrachten Büchse (9) zur Ermöglichung der Zentrierung des ersten Stanzstempels (7) in dem zweiten Stanzstempel (1) seitlich in dieser oberen Scheibe beweglich ist, und Mittel zum Ausüben einer Kraft auf den ersten Stanzstempel, die wenigstens gleich der zum Ausstanzen des Kernlochs erforderlichen Kraft ist, sowie zum Ausüben einer Kraft auf den zweiten Stanzstempel, die wenigstens gleich der zum Ausstanzen des Mittellochs erforderlichen Kraft ist.

8. Vorrichtung nach Anspruch 7, dadurch gekennzeichnet, daß die Mittel zum Ausüben der Kräfte auf den ersten Stanzstempel (7) und auf den zweiten Stanzstempel (1) zwei bemessene Federn (11, 5) sind.

9. Vorrichtung nach Anspruch 7, dadurch gekennzeichnet, daß der von den oberen Scheibe getragene Stanzstempel (7) von einem Dämpfungsglied aus zwei auf eine Gummibeilagscheibe (24) geklebten Metallbeilagscheiben (22, 23) umgeben ist, damit das als Träger der gravierten Preßform dienende elastische Polster von dem Stanzstempel isoliert wird.

0 013 522

FIG. 1

Fig. 2

Fig. 3

Fig. 4

Fig. 5

Fig. 6

Fig. 7